# EUROPÄISCHE PATENTSCHRIFT

(11) **EP 1 860 003 B1**
(45) Veröffentlichungstag und Bekanntmachung des Hinweises auf die Patenterteilung: **17.09.2008**
(21) Anmeldenummer: 07108658.1
(22) Anmeldetag: 22.05.2007
(51) Int. Cl.: B60R 25/04, B60R 25/02

(54) **Schutzeinrichtung für eine Zünd-Starteinrichtung eines Kraftfahrzeugs sowie ein zugehöriges Verfahren**
Protection device for an ignition start device of a motor vehicle and pertinent method
Dispositif de protection pour un dispositif d'allumage à bougie d'un véhicule automobile tout comme procédé correspondant

(30) Priorität: 22.05.2006 DE 102006024128
(43) Veröffentlichungstag der Anmeldung: 28.11.2007
(73) Patentinhaber: Huf Hülsbeck & Fürst GmbH & Co. KG, 42551 Velbert (DE)
(72) Erfinder: Brunner, Siegfried, 46562 Mainz (DE)
(74) Vertreter: Schmidt, Frank-Michael

(56) Entgegenhaltungen:
- DE-A1-0102004 063 24

## Beschreibung

Die vorliegende Erfindung betrifft eine Schutzeinrichtung für eine Zünd-Starteinrichtung eines Kraftfahrzeugs sowie ein zugehöriges Schutzverfahren. Insbesondere betrifft die Erfindung eine Schutzeinrichtung für Zünd-Starteinrichtungen, die in Verbindung mit Benutzer-Identifikationssystemen verwendet werden.

Schutzeinrichtungen der genannten Art weisen eine manuell betätigbare Handhabe auf. Der Handhabe ist ein Magnet-Stellantrieb zugeordnet, mit einer von einer Ansteuerschaltung bestrombaren Spule und einem Permanentmagneten sowie Stellmitteln, auf welche ein Magnetfeld der Spule zur Bewegung einwirken kann und die eine die Handhabe sperrende Sperrstellung und eine Handhabe freigebende Freigabestellung einnehmen können. Die Stellmittel sind in der Freigabestelle von der Magnetkraft des Permanentmagneten haltbar. Die Ansteuerschaltung kann die Spule bestromen, um die Stellmittel in die Sperrstellung oder in die Freigabestellung zu bewegen.

Einrichtungen der genannten Art werden verwendet, um eine Schaltfunktion einer manuell betätigbaren Handhabe zu sperren oder freizugeben, in Abhängigkeit davon, ob der auf die Handhabe zugreifende Benutzer in einer Legitimationsprüfung als berechtigt erkannt wird. Der Magnet-Stellantrieb bewegt Stellmittel, z.B. einen Stempel, in einer axialen Richtung, wobei die Stellmittel einen Blockierungsteil aufweisen oder auf ein solches einwirken, welches die Betätigung der Handhabe entsprechend der Stellung der Stellmittel blockiert oder freigibt.

Der Magnet-Stellantrieb ist mit den Stellmitteln bistabil ausgelegt, so daß die Stellmittel sowohl in der Freigabestellung als auch in der Sperrstellung stabil gehalten sind. Lediglich für einen Wechsel zwischen Sperr- und Freigabestellung wird die Spule des Magnet-Stellantriebs bestromt, so daß die Stellmittel aus der Sperrstellung in die Freigabestellung gelangen und dann von der Kraft des Permanentmagneten in dieser Stellung gehalten werden. Bei der Sperrung werden die Stellmittel aus der Freigabestellung in die Sperrstellung bewegt. Unter "bestromen" ist dabei die Einleitung eines Stromes durch Anlegen entsprechender Spannung an die Spule zu verstehen, wobei die Spannung und Stromstärke in Abhängigkeit von den Parametern der Einrichtung (Induktivität, Masse und Material der Stellmittel etc.) zu wählen ist. Eine Schutzeinrichtung gemäß dem Oberbegriff des Anspruchs 1 ist aus dem Dokument DE 102004063240 bekannt.

Ein bekanntes Problem bei derartigen Einrichtungen besteht darin, daß durch eine mechanische Einwirkung, wie z.B. einen Schlag auf die Handhabe, ein Impulsübertrag an die gesamte Einrichtung stattfindet, wodurch Teile der Einrichtung gegeneinander bewegt werden. Da die Stellmittel so gelagert sind, daß sie durch das beim Bestromen der Spule erzeugte Magnetfeld zwischen Freigabe- und Sperrstellung bewegt werden können, sind insbesondere die Stellmittel durch den Impulsübertrag gegenüber der übrigen Einrichtung bewegbar. Bei einem entsprechend ausgeführten Schlag (auch als Prellschlag bekannt) reicht der übertragene Impuls aus, die Stellmittel in einer Weise zu bewegen, wie sie sonst nur durch eine entsprechende Bestromung der Spule bewegt werden, nämlich in den Magnetkreis des Permanentmagneten, der sie durch seine Magnetkraft hält und entsprechend in eine stabile Freigabestellung bringt. Dadurch ist auch für den unberechtigten Benutzer die Betätigung der Handhabe möglich, obwohl keine Bestromung der Spule stattgefunden hat.

Aufgabe der Erfindung ist es, eine Schutzeinrichtung für eine Zünd-Starteinrichtung eines Kraftfahrzeugs zur Verfügung zu stellen, welche eine erhöhte Sicherheit gegen mechanische Einwirkung von Unberechtigten bereitstellt.

Die Aufgabe wird erfindungsgemäß gelöst durch eine Schutzeinrichtung mit den Merkmalen des Patentanspruchs 1 sowie durch ein Verfahren mit den Merkmalen des Patentanspruchs 9.

Die erfindungsgemäße Schutzeinrichtung weist mit der Ansteuerschaltung gekoppelte Sensormittel auf, die eine Bewegung der Stellmittel aus der Sperrstellung in die Freigabestellung erfassen und der Ansteuerschaltung signalisieren. Die Ansteuerschaltung ist so ausgebildet, daß sie die Spule in Reaktion auf ein die Bewegung der Stellmittel in die Freigabestellung anzeigendes Signal der Sensormittel zur Bewegung der Stellmittel in die Sperrstellung bestromen kann.

Gegenüber den bekannten Schutzeinrichtungen erfolgt erfindungsgemäß eine separate Überwachung der Bewegung der Stellmittel. Sofern die Stellmittel, z.B. durch mechanische Gewalteinwirkung, aus der Sperrstellung in die Freigabestellung bewegt werden, erfassen die Sensormittel dies und signalisieren die Bewegung der Ansteuerschaltung. Die Sensormittel können beliebige übliche Sensoren sein, wie z.B. Schalter, optische Sensoren oder Beschleunigungssensoren sowie beliebige Schaltungen, die eine Bewegung der Stellmittel in ein Signal wandeln.

Diese Funktion der Schutzeinrichtung gewährleistet, daß die Stellmittel die Freigabestellung nicht vollständig oder nur kurzzeitig verlassen und rasch wieder in die Sperrstellung zurückkehren. Die bislang bestehende Möglichkeit der Bewegung der Stellmittel durch Gewalteinwirkung in eine stabile Freigabestellung wird unterbunden.

Sobald die Sensormittel eine Bewegung der Stellmittel aus der Sperrstellung in die Freigabestellung signalisieren, steuert die Ansteuerschaltung die Spule des Magnet-Stellantriebs derart an, daß das in der Spule aufgebaute Magnetfeld die auf die Stellmittel wirkende Gesamtkraft derart verändert, daß die Stellmittel in die Sperrstellung bewegt werden. Sofern an den Stellmitteln beispielsweise mechanische Elemente zur Vorspannung in die Sperrstellung angeordnet sind, kann dies geschehen, indem die Magnetkraft des Permanentmagneten durch das Magnetfeld der bestromten Spule neutralisiert wird, so daß allein die mechanische Kraft der Vorspannelemente auf die Stellmittel wirkt und diese aus der Spule herausdrücken kann. Alternativ kann das Magnetfeld der Spule das stationäre Magnetfeld überkompensieren.

Der fremdveranlaßten, z.B. durch Gewalteinwirkung verursachten Bewegung der Stellmittel aus der Sperrstellung in Richtung der Freigabestellung wird auf diese Weise unmittelbar und mit Hilfe elektrischer und elektronischer Mittel durch eine entgegengesetzte Kraft entgegengewirkt. Der Begriff "fremdveranlaßt" bedeutet insbesondere, daß die Veranlassung zur Bewegung der Stellmittel in die Freigabestellung nicht Benutzter- oder fahrzeugseitig motiviert und veranlaßt ist. Die mechanische Gewalteinwirkung ist die wahrscheinlichste Möglichkeit einer fremdveranlaßten Bewegung, allerdings sind auch andere Beeinflussungen denkbar.

Die Ansteuerschaltung kann so ausgebildet sein, daß immer dann, wenn eine Bewegung der Stellmittel aus der Sperrstellung in die Freigabestellung registriert wird und die Ansteuerschaltung diese Freigabe nicht initiiert hat, eine entsprechende Gegenbestromung zur Bewegung der Stellmittel in die Sperrstellung stattfindet.

Alternativ oder zusätzlich können, sobald eine entsprechende Bewegung registriert wird, weitere Signale oder Berechtigungen geprüft werden. Außerdem können verschiedene andere Parameter (z.B. Betriebszustand des Fahrzeugs oder Geschwindigkeit) berücksichtigt werden, bevor eine entsprechende Ansteuerung der Spule des Magnet-Stellantriebs stattfindet.

Die Schutzfunktion kann in einfacher und beliebiger Weise genutzt und aktiviert werden, da sie auf elektrischem Weg wirkt. Der üblichste Anwendungsfall ist insbesondere der Schutz eines Fahrzeugs im Ruhezustand. In diesem Fall ist beispielsweise eine direkte Ansteuerung eines im Sleepmode befindlichen Mikrocontrollers durch die Sensormittel geeignet, die Schutzfunktion gemäß der Erfindung zu ermöglichen. Ob durch die Ansteuerschaltung auf ein Signal der Sensormittel hin eine Bestromung tatsächlich erfolgt, kann auch von weiteren Parametern abhängig gemacht werden.

In jedem Fall ist zu gewährleisten, daß eine fahrzeugseitig veranlaßte Bewegung der Stellmittel in die Freigabestellung nicht zu einer Auslösung der Schutzfunktion führt. Dies kann beispielsweise durch eine entsprechende Deaktivierung der Sensormittel erfolgen oder durch Ignorieren der Sensorsignale in der Ansteuerschaltung. In anderen Ausführungsformen wird das Sensorsignal beim planmäßigen Bestromen zur Freigabe der Stellmittel ohnehin derart überlagert, daß keine entsprechende Reaktion der Ansteuerschaltung erfolgt.

Vorzugsweise weisen die Stellmittel ein in einem Magnetkreis der Spule angeordneten Anker auf.

Unter "Magnetkreis" ist die Gesamtheit der von dem Magnetfluß durchsetzten Teile und Räume zu verstehen. Als "Anker" wird allgemein jedes Teil bezeichnet, auf welches ein Magnetfeld einwirken kann.

Der Anker kann aus einem metallischen Stempel gebildet sein, der sich in der Sperr- oder Freigabestellung teilweise in das Spuleninnere erstreckt, damit eine besonders starke Wechselwirkung zwischen Anker- und Magnetkreis gewährleistet ist.

In vorteilhafter Weiterbildung ist bei der Schutzeinrichtung an dem Magnet-Stellantrieb ein mit dem Magnetkreis des Permanentmagneten gekoppelter Pohlschuh ausgebildet, an dem die Stellmittel in der Freigabestellung anliegen und in dieser Stellung haltbar sind.

Die Stellmittel liegen in Freigabestellung an dem Polschuh an und werden durch den Magnetfluß des geschlossenen Magnetkreises auf diese Weise gehalten, auch wenn das Spulen-Magnetfeld abgeschaltet ist. Der Polschuh kann eine auf die Stellmittel angepaßte Formgebung aufweisen, z.B. eine Aufnahme für einen Endabschnitt der Stellmittel bilden.

Es ist besonders vorteilhaft, wenn die Sensormittel als Schaltung ausgebildet sind, welche als Eingangssignal die elektrische Spannung der Spule verarbeitet und daraus ein Signal der Sensormittel bereitstellt.

Die Mehrzweck-Verwendung der Spule als Betätigungsmittel für die Stellmittel einerseits, nämlich bei Ansteuerung durch die Ansteuerschaltung, und als Sensormittel andererseits, ermöglicht eine besonders einfache und wirkungsvolle Ausbildung der Schutzeinrichtung. Im Falle einer mechanischen Einwirkung werden die Stellmittel gegenüber der Spule verschoben, wobei die Bewegung des Ankers gegenüber der Spule eine Spulenspannung induziert. Die induzierte Spulenspannung kann als Signal einer Bewegung der Stellmittel registriert und ausgewertet werden. Auf diese Weise ist es nicht erforderlich, weitere Sensormittel in Form von Schaltern oder anderen mechanischen oder optischen Sensoren bereitzustellen, sondern es ist lediglich eine Schaltung zur Überwachung und Auswertung der Spulenspannung erforderlich. Es hat sich gezeigt, daß in einer Spule durch eine entsprechende Gewalteinwirkung in Form eines Prellschlags kurzzeitig Spannungen von bis zu 7 Volt induziert werden. Derartige Spannungen (und auch wesentlich geringere Spannungen) sind einfach zu erfassen und zu verarbeiten. Außerdem ist es möglich, durch Berücksichtigung von Spannungsverlauf und Zeitverhalten, Störungen, die beispielsweise bei Fahrbewegungen und Relativbewegungen zwischen Anker und Spule auftreten, herauszufiltern. Ein entsprechender Bandpaß kann eingesetzt werden, um Störsignale zu filtern.

Ein weiterer Aspekt der Erfindung ist das erfindungsgemäße Schutzverfahren. Gemäß diesem Verfahren werden die Stellmittel mit Hilfe von Sensormitteln überwacht, um eine Bewegung der Stellmittel aus der Sperrstellung in die Freigabestellung zu erfassen. Während im Stand der Technik nur eine Ansteuerung des Magnet-Stellantriebs erfolgt, wird erfindungsgemäß die Bewegung oder allgemein eine Lageänderung erfaßt.

Sobald eine Bewegung der Stellmittel erfaßt wird, welche fremdveranlaßt ist, wird die Spule des Magnet-Stellantriebs bestromt, um die Stellmittel in die Sperrstellung zu bewegen.

Vorzugsweise wird bei dem erfindungsgemäßen Verfahren die Spulenspannung des Magnet-Stellantriebs überwacht, also die Spule als Teil der Sensormittel verwendet. Ein in der Spule erzeugtes Spannungssignal wird zum Erfassen einer Bewegung der Stellmittel ausgewertet. Auf diese Weise kann das Verfahren ohne die Anbringung von weiteren Sensoren ausgeführt werden, indem die Spulenzuleitungen entsprechend zusätzlich beschaltet werden und ein Spannungssignal der Spule abgegriffen wird.

Es ist auch möglich, zusätzliche Schritte in dem Verfahren vorzusehen, wie z.B. einen Parameter abzufragen, bevor eine Gegenbestromung der Spule erfolgt.

Weitere vorteilhafte Ausführungsformen der Erfindung sind in den Ansprüchen angegeben.

Die Erfindung wird nun anhand der beiliegenden Zeichnungen erläutert.

Figur 1 zeigt eine Ausführungsform der Erfindung, die in ein Lenkschloß eines Kraftfahrzeugs integriert ist.

Figur 2 zeigt einen Magnet-Stellantrieb aus einer Ausführungsform der Erfindung.

Figur 3 zeigt anhand von Schnittansichten die Funktion der Erfindung.

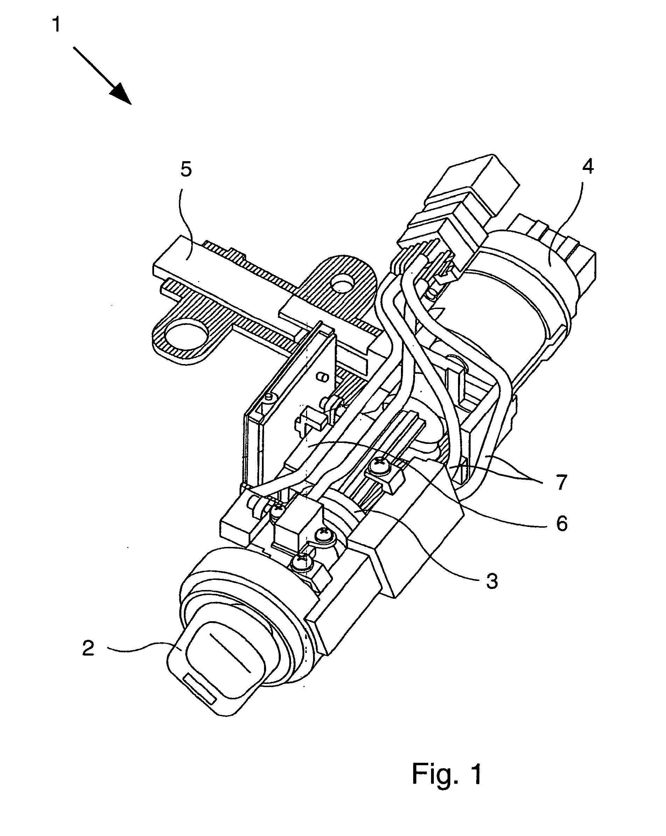

In Figur 1 ist eine Zünd-Starteinrichtung in Form eines Lenkschlosses gezeigt. Eine Handhabe 2 ist als Drehknopf ausgebildet. Mit dem Drehknopf gekoppelt ist eine Nockenwelle 3. An einem dem Drehknopf 2 entgegengesetzten Ende der Nockenwelle 3 ist ein elektrisches Schaltteil 4 angeschlossen, welches die verschiedenen Schaltzustände des Zündschlosses realisiert. Beispielsweise sind Schaltzustände ACC (accessory), On und Start, entsprechend der Drehstellung der Nockenwelle 3 schaltbar.

Zur Sperrung einer Lenksäule ist ein Riegel 5 bewegbar mit dem Lenkschloß gekoppelt. An dem Lenkschloß 1 ist ein Magnet-Stellantrieb 6 angeordnet, der eine Drehung des Knopfes 2 und der damit gekoppelten Nockenwelle 3 blockieren und freigeben kann. Der Magnet-Stellantrieb ist durch Zuleitungen 7 ansteuerbar.

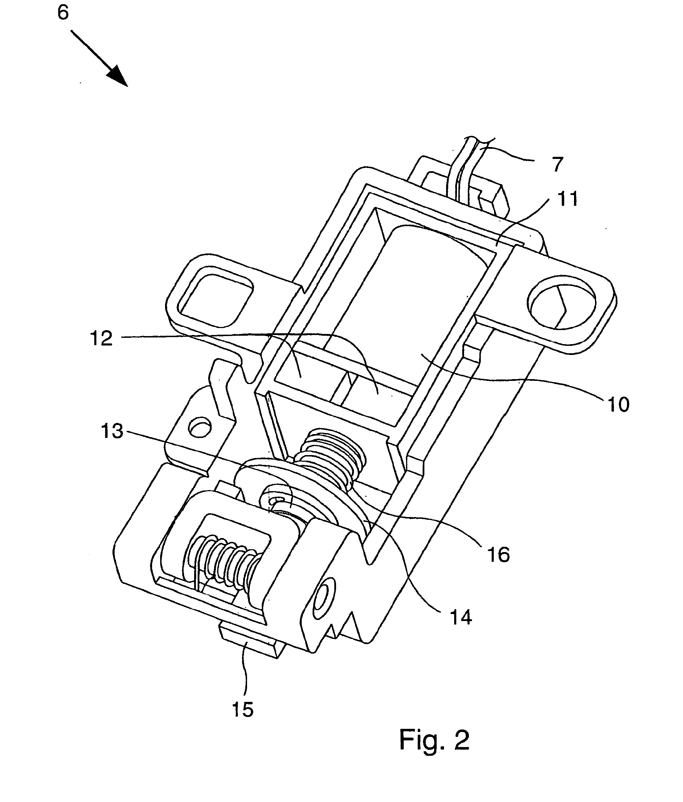

Figur 2 zeigt den Magnet-Stellantrieb 6 vergrößert und aus einer anderen Perspektive. Eine Spule 10 ist in einem Rahmen 11 angeordnet. In dem Rahmen 11 ist außerdem ein Permanentmagnet 12 plaziert. Der Permanentmagnet ist in diesem Ausführungsbeispiel zweiteilig ausgebildet. Ein Stempel 13 bildet mit einer um den Stempel angeordneten und axial fixierten Federhalteplatte 14 und einem Blockierungsteil 15 die Stellmittel. Eine Schraubenfeder 16 ist zwischen dem Rahmen 11 und der Federhalteplatte 14 über den Stempel 13 gesteckt und zwischen diesen Teilen verspannt. Die Schraubenfeder 16 drängt die Federhalteplatte 14 und den mit ihr gekoppelten Stempel 13 und das Blockierungsteil 15 in Richtung der Blockierungsstellung, in der das Blockierungsteil 15 die Drehung des Knopfes 2 verhindert.

Auf der dem Blockierungsteil 15 abgewandten Ende des Stempels 13 ist an dem Spulenrahmen 11 ein Polschuh 21 ausgebildet. Der Polschuh weist eine kreisrunde Ausnehmung auf, in die der Stempel 13 mit einem entsprechend geformten Endabschnitt eintauchen kann.

Die Spule 10 ist über Zuleitungen 7 bestrombar, so daß ein Magnetfeld aufgebaut werden kann, welches den Stempel 13 entgegen der Federkraft der Schraubenfeder 16 in die Spule hineinzieht und das Blockierungsteil 15 aus seiner Blockierungsstelle herausbewegt.

Sofern dies geschieht, wird der Stempel 13 in dieser Stellung (Freigabestellung) durch die Magnetkraft des Permanentmagneten 12 gehalten, da der Magnetkreis geschlossen wird. Zwar wirkt die Federkraft der Schraubenfeder 16 der stabilen Lage entgegen und drängt den Stempel 13 in Richtung der Sperrstellung, die mechanische Federkraft ist jedoch allein nicht ausreichend, um die Magnetkraft der Permanentmagneten 12 zu überwinden.

Sobald Strom in entgegengesetzter Stromrichtung in die Spule eingeleitet wird, wird der Stempel 13 durch die Kraft der Feder herausgedrückt (die Kraft des Permanentmagneten wird neutralisiert). Das Blockierungsteil 15 wird durch diese Kraft wieder in die Sperrstellung zurückbewegt.

Bei dem gezeigten Ausführungsbeispiel wird die Spannung der Spule 10 überwacht, indem eine Schaltung (nicht gezeigt) mit den Zuleitungen 7 gekoppelt ist. Sobald eine mechanische Kraft das Blockierungsteil 15 und mit ihm den Stempel 13 relativ zu der Spule bewegt, wird in der Spule 10 eine über die Leitungen 7 erfaßbare Spannung induziert. Diese Spannung wird erfaßt, mit einem Bandpaß gefiltert und an eine Steuerschaltung geleitet. Sofern die Bewegung des Stempels 12 fremdveranlaßt ist, also keine Auslösung von Kraftfahrzeugseite erfolgt ist, wird ein entsprechender Gegenstrom über die Zuleitungen 7 in die Spule eingeleitet, so daß der Stempel 13 wieder aus der Spule 10 herausbewegt wird und das Blockierungsteil 15 entsprechend wieder eine Drehung der Handhabe 2 verhindert.

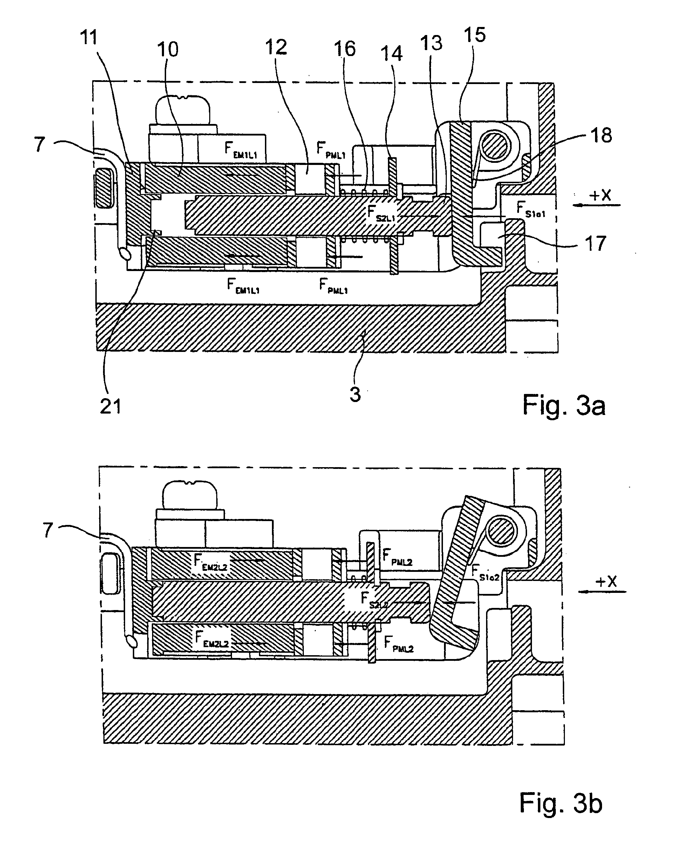

Die Figuren 3A und 3B zeigen den an der Nockenwelle 3 angeordneten Magnet-Stellantrieb 6 in einer Schnittansicht in verschiedenen Zuständen.

Figur 3A zeigt, daß sich das Blockierungsteil 15 derart in Eingriff mit einer an der Nockenwelle 3 angeordneten Nockenscheibe 17 befindet, daß eine Drehung der Nockenwelle blokkiert ist. Der Stempel 13 ist durch die Schraubenfeder 16 in Anlage zu dem Blockierungsteil 15 gebracht und hält dieses entgegen der Federkraft einer Torsionsfeder 18 in der Sperrstellung. Sobald die Spule 10 entsprechend bestromt wird, wird der Stempel 13 mit der Federhalteplatte 14 in Richtung der Spule gezogen.

Die entsprechende resultierende Freigabestellung ist in Figur 3B gezeigt. Die Bewegung des Stempels 13 aus der in Figur 3A gezeigten Stellung in die in Figur 3B gezeigte Stellung erzeugt jedoch immer dann, wenn keine Bestromung der Spule stattfindet, eine Induktionsspannung in der Spule 10, welche über die Zuleitungen 7 abgreifbar ist. Wie oben beschrieben, wird in diesem Fall die Spule derart bestromt, daß der Stempel herausgedrängt wird und das Blockierungsteil 15 erneut in die Nockenscheibe 17 eingreift.

Die Erfassung und entsprechende Gegenbestromung der Schutzeinrichtung ist innerhalb weniger Millisekunden möglich, so daß die Sperrung wieder aufgebaut wird, noch bevor das Sperrteil 15 vollständig außer Eingriff mit der Nockenscheibe 17 kommt. Die Auswertung des Spannungssignals kann durch eine entsprechende Schaltung erfolgen, die unmittelbar an der Schutzeinrichtung angeordnet ist oder durch eine entsprechende entfernt angeordnete Schaltung, z.B. im Bereich der zentralen Steuereinrichtung. Außerdem können auch Softwarelösungen verwendet werden.

## Patentansprüche

1. Schutzeinrichtung für eine Zünd-Starteinrichtung eines Kraftfahrzeugs, mit
einer manuell betätigbaren Handhabe,
einem Magnet-Stellantrieb, aufweisend:
eine von einer Ansteuerschaltung bestrombare Spule,
einen Permanentmagnet, und
Stellmittel, auf welche ein Magnetfeld der Spule zur Bewegung einwirken kann und die eine die Handhabe sperrende Sperrstellung und eine die Handhabe freigebende Freigabestellung einnehmen können, wobei die Stellmittel in der Freigabestellung von der Magnetkraft des Permanentmagneten haltbar sind, und
wobei die Ansteuerschaltung die Spule zur Bewegung der Stellmittel in die Sperrstellung und in die Freigabestellung bestromen kann,
**dadurch gekennzeichnet,**
**daß** mit der Ansteuerschaltung Sensormittel gekoppelt sind, die eine Bewegung der Stellmittel aus der Sperrstellung in die Freigabestellung erfassen und der Ansteuerschaltung signalisieren,
**daß** die Ansteuerschaltung so ausgebildet ist, daß die Spule in Reaktion auf ein die Bewegung in die Freigabestellung anzeigendes Signal der Sensormittel bestrombar ist.

2. Schutzeinrichtung nach Anspruch 1, **dadurch gekennzeichnet, daß** die Stellmittel einen in einem Magnetkreis der Spule angeordneten Anker umfassen.

3. Schutzeinrichtung nach Anspruch 1 oder 2, **dadurch gekennzeichnet, daß** an dem Magnet-Stellantrieb ein mit dem Magnetkreis des Permanentmagneten gekoppelter Pohlschuh ausgebildet ist, an dem die Stellmittel in der Freigabestellung anliegen und in dieser Stellung haltbar sind.

4. Schutzeinrichtung nach Anspruch 2 oder 3, **dadurch gekennzeichnet, daß** die Sensormittel als Schaltung ausgebildet sind, welche als Eingangssignal die elektrische Spannung der Spule verarbeitet und daraus ein Signal der Sensormittel bereitstellt.

5. Schutzeinrichtung nach Anspruch 4, **dadurch gekennzeichnet, daß** die Schaltung elektrische Filterungsmittel aufweist, um Spannungssignale der Spule zu filtern.

6. Schutzeinrichtung nach einem der Ansprüche 1 bis 5, **dadurch gekennzeichnet, daß** die Handhabe als drehbarer Knopf ausgebildet ist, der von den Stellmitteln in ihrer Sperrstellung undrehbar arretiert ist.

7. Schutzeinrichtung nach Anspruch 6, **dadurch gekennzeichnet, daß** mit dem Knopf eine Nockenscheibe gekoppelt ist, in die ein Blockierungsteil der Stellmittel in Sperrstellung eingreift.

8. Schutzeinrichtung nach einem der Ansprüche 1 bis 7, **dadurch gekennzeichnet, daß** elastische Mittel vorgesehen sind, welche die Stellmittel aus der Freigabestellung in die Sperrstellung drängen.

9. Verfahren zum Schützen einer manuell betätigbaren Zünd-Starteinrichtung, welche aufweist:
eine manuell betätigbare Handhabe;
einen Magnet-Stellantrieb mit einer von einer Ansteuerschaltung bestrombaren Spule, einem Permanentmagnet und Stellmitteln, welche von einem Magnetfeld der Spule betätigt werden und eine die Handhabe sperrende Sperrstellung und eine die Handhabe freigebende Freigabestellung einnehmen können, wobei die Stellmittel in der Freigabestellung von der Magnetkraft des Permanentmagneten gehalten werden;
wobei die Spule zur Bewegung der Stellmittel in die Sperrstellung und in die Freigabestellung von der Ansteuerschaltung bestromt wird;
wobei die Stellmittel mit Hilfe von Sensormitteln überwacht werden, um eine fremdveranlaßte Bewegung der Stellmittel aus der Sperrstellung in die Freigabestellung zu erfassen
und wobei dann, wenn eine solche Bewegung der Stellmittel aus der Sperrstellung in die Freigabestellung erfaßt wird, die Spule des Magnet-Stellantriebs bestromt wird, um die Stellmittel in die Sperrstellung zu bewegen.

10. Verfahren nach Anspruch 9, **dadurch gekennzeichnet, daß** zum Überwachen der Stellmittel die Spule als Teil der Sensormittel verwendet wird, wobei ein in der Spule erzeugtes Spannungssignal zum Erfassen einer Bewegung der Stellmittel verwendet wird.

11. Verfahren nach Anspruch 10, **dadurch gekennzeichnet, daß** das Spannungssignal in der Spule erzeugt wird, indem die Stellmittel wenigstens abschnittsweise in der Spule bewegt werden.

12. Verfahren nach Anspruch 10 oder 11, **dadurch gekennzeichnet, daß** die Spannungssignale gefiltert werden.

13. Verfahren nach Anspruch 11 oder 12, **dadurch gekennzeichnet, daß** ein Ausgangssignal der Sensormittel zur Verarbeitung an eine zentrale Steuereinrichtung übertragen wird.

## Claims

1. A protective device for an ignition start device on a motor vehicle including a manually actuable handle,
a magnetic actuator, including: a coil which may be energised by a control circuit,
a permanent magnet, and
positioning means, on which a magnetic field of the coil can act to move it and which can adopt a locked position, in which it locks the handle, and a release position, in which it releases the handle, wherein the positioning means may be retained in the release position by the magnetic force of the permanent magnet, and
wherein the control circuit can energise the coil to move the positioning means into the locked position and into the release position,
**characterised in that**
sensor means are coupled to the control circuit, which detects movement of the positioning means out of the locked position into the release position and sends a signal to the control circuit,
that the control circuit is so constructed that the coil may be energised in reaction to a signal from the sensor means indicating movement into the release position.

2. A protective device as claimed in claim 1, **characterised in that** the positioning means include an armature arranged in a magnetic circuit of the coil.

3. A protective device as claimed in claim 1 or 2, **characterised in that** formed on the magnetic actuator there is a pole shoe coupled to the magnetic circuit of the permanent magnet which is engaged by the positioning means in the release position and may be retained in this position.

4. A protective device as claimed in claim 2 or 3, **characterised in that** the sensor means is constructed as a circuit, which processes the electrical voltage of the coil as an input signal and provides a signal of the sensor means therefrom.

5. A protective device as claimed in claim 4, **characterised in that** the circuit includes electrical filtering means in order to filter voltage signals from the coil.

6. A protective device as claimed in one of claims 1 to 5, **characterised in that** the handle is constructed in the form of a rotatable knob, which is non-rotatably locked in its locked position by the positioning means.

7. A protective device as claimed in claim 6, **characterised in that** coupled with the knob there is a cam disc, into which a locking portion of the positioning means engages in the locked position.

8. A protective device as claimed in one of claims 1 to 7, **characterised in that** elastic means are provided, which urge the positioning means out of the release position into the locked position.

9. A method of protecting a manually actuable ignition start device, which includes:
a manually actuable handle;
a magnetic actuator with a coil which may be energised by a control circuit, a permanent magnet and positioning means which can be actuated by a magnetic field of the coil and can adopt a locked position, in which it locks the handle, and a release position, in which it releases the handle, wherein the positioning means are retained in the release position by the magnetic force of the permanent magnet;
wherein the coil is energised by the control circuit to move the positioning means into the locked position and into the release position;
wherein the positioning means is monitored with the aid of sensor means in order to detect an externally caused movement of the positioning means from the locked position into the release position
and wherein, when such a movement of the positioning means from the locked position into the release position is detected, the coil of the magnetic actuator is then energised in order to move the positioning means into the locked position.

10. A method as claimed in claim 9, **characterised in that**, for the purpose of monitoring the positioning means, the coil is used as a part of the sensor means, wherein a voltage signal produced in the coil is used for detecting a movement of the positioning means.

11. A method as claimed in claim 10, **characterised in that** the voltage signal is produced in the coil by moving the positioning means into the coil, at least in sections.

12. A method as claimed in claim 10 or 11, **characterised in that** the voltage signals are filtered.

13. A method as claimed in claim 11 or 12, **characterised in that** an output signal from the sensor means is transmitted to a central control device for processing.

## Revendications

1. Dispositif de protection pour démarreur d'allumage d'un véhicule automobile, comprenant :
une manette actionnable manuellement, un mécanisme de commande magnétique, présentent :
une bobine pouvant être mise sous tension par un circuit de commande,
un aimant permanent, et
des moyens de commande, qui peuvent être déplacés sous l'action d'un champ magnétique de la bobine et peuvent adopter une position de blocage bloquant la manette et une position de libération libérant la manette, les moyens de commande pouvant être maintenus en position de libération par la force magnétique de l'aimant permanent, et
le circuit de commande pouvant mettre sous tension la bobine pour déplacer les moyens de commande en position de blocage et en position de libération,
**caractérisé en ce que**
des moyens de détection sont couplés au circuit de commande, lesquels moyens de détection détectent un déplacement des moyens de commande de la position de blocage à la position de libération et le signalent au circuit de commande, et
le circuit de commande est conformé de sorte que la bobine soit mise sous tension en réaction à un signal des moyens de détection qui indique le déplacement en position de libération.

2. Dispositif de protection selon la revendication 1, **caractérisé en ce que** les moyens de commande comprennent un induit aménagé dans un circuit magnétique de la bobine.

3. Dispositif de protection selon la revendication 1 ou 2, **caractérisé en ce que** l'on forme sur la commande magnétique une pièce polaire qui est couplée au circuit magnétique de l'aimant permanent, sur lequel les moyens de commande s'appliquent en position de libération et peuvent être maintenus dans cette position.

4. Dispositif de protection selon la revendication 2 ou 3, **caractérisé en ce que** les moyens de détection se présentent sous la forme d'un circuit, qui traite la tension électrique de la bobine comme signal d'entrée et en tire un signal des moyens de détection.

5. Dispositif de protection selon la revendication 4, **caractérisé en ce que** le circuit présente des moyens de filtrage électrique pour filtrer des signaux de tension de la bobine.

6. Dispositif de protection selon l'une quelconque des revendications 1 à 5, **caractérisé en ce que** la manette se présente sous la forme d'un bouton rotatif, qui est bloqué, sans pouvoir tourner, dans sa position de blocage par les moyens de commande.

7. Dispositif de protection selon la revendication 6, **caractérisé en ce que** l'on accouple au bouton un disque de came, dans lequel s'engage une partie de blocage des moyens de commande en position de blocage.

8. Dispositif de protection selon l'une quelconque des revendications 1 à 7, **caractérisé en ce que** l'on prévoit des moyens élastiques qui poussent les moyens de commande de la position de libération à la position de blocage.

9. Procédé pour protéger un démarreur d'allumage actionnable manuellement, qui présente :
une manette actionnable manuellement ;
un mécanisme de commande magnétique pourvu d'une bobine pouvant être mise sous tension par un circuit de commande, d'un aimant permanent et de moyens de commande, qui sont actionnés par un champ magnétique de la bobine et qui peuvent adopter une position de blocage bloquant la manette et une position de libération libérant la manette, les moyens de commande étant maintenus en position de libération par la force magnétique de l'aimant permanent ;
dans lequel la bobine est mise sous tension par le circuit de commande pour déplacer les moyens de commande en position de blocage et en position de libération ;
dans lequel les moyens de commande sont surveillés à l'aide de moyens de détection pour détecter un déplacement, provoqué par un élément extérieur, des moyens de commande de la position de blocage à la position de libération ; et
dans lequel, lorsqu'un tel déplacement des moyens de commande de la position de blocage à la position de libération est détecté, la bobine du mécanisme de commande magnétique est mise sous tension pour déplacer les moyens de commande en position de blocage.

10. Procédé selon la revendication 9, **caractérisé en ce que** l'on utilise la bobine comme partie intégrante des moyens de détection pour surveiller les moyens de commande, un signal de tension généré dans la bobine étant utilisé pour détecter un déplacement des moyens de commande.

11. Procédé selon la revendication 10, **caractérisé en ce que** le signal de tension est généré dans la bobine par déplacement des moyens de commande au moins par segments dans la bobine.

12. Procédé selon la revendication 10 ou 11, **caractérisé en ce que** les signaux de tension sont filtrés.

13. Procédé selon la revendication 11 ou 12, **caractérisé en ce qu'**un signal de sortie des moyens de détection est transmis pour traitement à une unité de commande centrale.
